# EUROPÄISCHE PATENTSCHRIFT

(11) **EP 0 535 187 B1**
(45) Veröffentlichungstag und Bekanntmachung des Hinweises auf die Patenterteilung: **30.07.1997**
(21) Anmeldenummer: 92907541.4
(22) Anmeldetag: 01.04.1992
(51) Int. Cl.: F16L 58/10

(54) **VERFAHREN ZUR HERSTELLUNG EINES ZUMINDEST INNENSEITIG MIT EINER SCHUTZSCHICHT VERSEHENEN METALLROHRES**
PROCESS FOR PRODUCING A METALLIC TUBE PROVIDED WITH A PROTECTIVE LAYER AT LEAST ON ITS INNER SIDE
PROCEDE DE FABRICATION D'UN TUYAU METALLIQUE POURVU AU MOINS SUR SA FACE INTERIEURE D'UNE COUCHE DE PROTECTION

(30) Priorität: 02.04.1991 DE 4110584
(43) Veröffentlichungstag der Anmeldung: 07.04.1993
(73) Patentinhaber: Akin, Okan, Dr., NL-6224 LA Maastricht (NL); Grefkes, Horst, Dr., D-41749 Viersen (DE)
(72) Erfinder: Akin, Okan, Dr., NL-6224 LA Maastricht (NL); Grefkes, Horst, Dr., D-41749 Viersen (DE); Troost, Alex, Dr. Professor, NL-6295 NC Lemiers/Vaals (NL)
(74) Vertreter: Bonsmann, Manfred, Dipl.-Ing.
(86) Internationale Anmeldenummer: DE9200265
(87) Internationale Veröffentlichungsnummer: WO9217729

(56) Entgegenhaltungen:
- EP-A- 0 299 408
- EP-A- 0 307 609
- DE-A- 3 932 865
- GB-A- 872 125

## Beschreibung

Die Erfindung bezieht sich auf ein Verfahren zur Herstellung eines zumindest innenseitig mit einer Schutzschicht versehenen Metallrohres, insbesondere ein gegen Lochfraßkorrosion geschütztes Metallrohr, bei dem eine Kaltverformung des Metallrohres durchgeführt und auf die Rohrwandung eine flüssige, viskose Beschichtung aus in eine bleibende, feste Schicht überführbaren Substanzen aufgetragen wird.

Rohre finden in größtem Ausmaß seit Jahrtausenden in Haus und Gewerbe Verwendung und bestehen derzeit überwiegend aus Metall. An sonstigen Materialien haben im wesentlichen noch Ton und Keramik und neuerdings Kunststoffe Bedeutung. Die erste Gruppe hat den Nachteil der Bruchgefahr. Bei Kunststoffen besteht die Gefahr der Alterung des Kunststoffes. Es haben deshalb Metallrohre nach wie vor den weitaus überwiegenden Anteil an Rohrmaterialien, insbesondere auch wegen der weit entwickelten Verbindungstechnik durch Schweißen und Löten und wegen der Möglichkeit, sie in gewissem Ausmaß zu biegen, wobei sie diese Verbiegung im Gegensatz zu Kunststoffrohren beibehalten.

Nachteilig an Rohren aus Metall ist, daß sie nicht ausreichend korrosionsfest sind. Dabei kommen als Metalle vor allem Blei, Gußeisen und Stahl in Betracht. Wegen seiner verhältnismäßig guten Korrosionsbeständigkeit hat ganz besonders Kupfer und seine Legierungen wieder stark an Bedeutung gewonnen, insbesondere deshalb, weil gegenüber Rohren aus Blei Bedenken wegen dessen Giftigkeit bestehen und Rohre aus Stahl oder Gußeisen korrosionsanfällig sind und aufwendig verschraubt oder verschweißt werden müssen.

Die Erfindung wird deshalb nachfolgend vorwiegend am bevorzugten Beispiel Kupfer beschrieben, hat aber Bedeutung und Vorteile auch bei allen anderen Rohrmaterialien auf Basis Metall.

Auch bei Kupfer stellt sich aber immer stärker heraus, daß selbst dieses hochwertige Material nicht in dem Maß korrosionsfest ist, wie man sich erhofft hat. Ganz besondere Probleme bringt dabei die sogenannte Lochfraßkorrosion. Die Ursache für diese Schadensart liegt wahrscheinlich darin, daß winzige Störungen im Metallgefüge oder in der mehr oder weniger dicken Oxidschicht, welcher Art sie auch sein mögen und welche Ursache sie haben, zu Lokalelementbildungen führen, die ausgehend von krater- und nadelstichartigen Angriffsstellen sehr rasch zur anodischen Auflösung des Werkstoffs an diesen Stellen und zur Zerstörung der Wandung des Rohres führen. Ähnliche Schäden treten auch bei anderen Metallen wie Gußeisen und Stahl auf.

Es besteht deshalb ein dringendes Bedürfnis, dem Übelstand der Korrosion, insbesondere der Lochfraßkorrosion zu begegnen und Metallrohre zu entwickeln, die nicht in mehr oder weniger kurzer Zeit zerstört werden. Bei Kupferrohren ist diese Problemstellung deshalb besonders akut, weil man dieses verhältnismäßig edle und damit auch kostenaufwendige Material gerade seiner Beständigkeit wegen wählt und dann umso mehr enttäuscht ist, wenn schon nach kurzer Zeit Korrosionsschäden auftreten, bzw. die Wandung durchlöchert wird.

In der DE-OS 39 32 865 (Offenlegungstag 14.4.91) - jetzt DE-PS 39 32 865 - wird erstmals ein neuer Weg beschritten. Nach der Lehre dieses älteren Patentes derselben Erfinder werden die für die Kaltverformung erforderlichen Mineralöle, die die Schmiermittel bilden, nicht mehr mit hohem Aufwand beseitigt, sondern man beläßt sie auf der Wandung des Rohres und setzt diesen sogar das 0,1 - bis 10-fache ihres Gewichtes an zusätzlichen C-haltigen Additiven zu und erhitzt dann dieses Gemisch auf so hohe Temperaturen, daß Vercrackung eintritt und sich so auf der Rohrwandung eine Schutzschicht ausbildet. Durch diese hat sich die Korrosionsschicht wesentlich verbessern lassen.

Nachteilig an diesem älteren Vorschlag ist, daß für das Cracken hohe Temperaturen von 300 bis 600°C erforderlich sind, durch die bei harten Rohren, die den überwiegenden Anteil ausmachen, ein deutlicher Verlust an Härte eintritt.

Aus der GB-A-872 125 ist ein fertiggeformter Metallbehälter bekannt, der auf seiner Innenseite mit Siloxan beschichtet ist, so daß feste Ablagerungen aus einer in dem Metallbehälter gelagerten oder transportierten Flüssigkeit von der Innenfläche des Behälters leicht entfernt werden können. Die Durchführung der Verformung des Metallbehälters wird hier nicht beschrieben.

Mit der Innenauskleidung eines Rohres befaßt sich die EP-A-0 307 609. Auch hier wird von einem bereits fertigen Rohr ausgegangen und vorgeschlagen, die Verbindung zwischen Innenauskleidung und Rohr aus einem geschäumten Kunststoff zu bilden.

In der EP-A-0 299 408 ist ein Rohr beschrieben, das auf seiner Innenfläche mit einer Harzschicht aus Fluorharz und Fluorelastomer beschichtet ist. Diese Schicht soll möglichst fest an der Innenfläche anhaften, um eine vorgegebene Abstreiffestigkeit zu erzielen. Während des Auftragens der Innenbeschichtung kann der Durchmesser des Rohres durch entsprechenden Druck auf dessen Außenfläche verringert werden. Über Schmiermittel zur Verformung des Rohres wird hier nichts ausgesagt, insbesondere nichts über das Beseitigen von Schmiermitteln.

Demgegenüber liegt die Aufgabe der vorliegenden Erfindung darin, die Herstellung von beschichteten Metallrohren zu vereinfachen, wobei die Beschichtung den vielfältigen Umweltanforderungen gerecht und die durch Kaltverformung gewonnene Festigkeit der Metallrohre im wesentlichen beibehalten werden soll.

Diese Aufgabe stellt sich vor allem deshalb immer dringender, weil im Zeitalter eines immer stärker werdenden Umweltbewußtsein und immer stärker in den Vordergrund tretender medizinischer Gesichtspunkte an solche Metallrohre immer höhere Anforderungen gestellt werden, wie längere Lebensdauer des Rohres, Verhinderung der Schwermetallemission bei Trink-,Gebrauchs- und Abwässern und damit Erhalt einer wesentlich besseren Trink- und Fabrikationswassergüte.

Es besteht deshalb ein dringendes Bedürfnis, Korrosionsschäden an Metallrohren weitgehend zu verhindern und die Emmission von giftigen Metallen wie Blei, Cadmium, Kupfer, Zink und anderen zu reduzieren, um deren negative Auswirkungen auf den Menschen, insbesondere Kinder zu verhindern. Vor allem ist man daran interessiert, die Lebensdauer solcher Metallrohre zu verlängern.

Gelöst wird diese Aufgabe bei einem Verfahren der eingangs genannten Art dadurch, daß zur Kaltverformung des Metallrohres auf die Rohrwandung eine flüssige Beschichtung mit Schmiermitteleigenschaften aufweisenden Monomeren, Oligomeren und/oder niedermolekularen Polymeren aufgebracht wird, die im Anschluß an die Kaltverformung in eine feste Schicht umgewandelt werden, deren wesentlicher Bestandteil zu der Gruppe gehört, die Polysiloxan, Siliconharz, Polystyrol, Polyolefinharz, Polyäthylen, Polypropylen, Polyisobutylen, Polyesterharz und Polyurethan umfaßt.

Da die der Erfindung zugrunde liegende Aufgabe darin besteht, das Metallrohr gegenüber den Medien, die durch das Metallrohr geleitet werden, zu schützen und dadurch dessen Lebensdauer zu verlängern, muß die Schutzschicht auf der Innenseite des Rohres aufgebracht sein und ist nicht zu verwechseln mit üblichen vorbekannten Schutzanstrichen, Überzügen und Isoliermitteln auf. der Außenseite des Metallrohres. Andererseits schließt das nicht aus, daß dieselbe Beschichtung und daraus gebildete Schicht auch außenseitig aufgebracht wird. Erfindungswesentlich ist aber der Auftrag der Beschichtung im Rohrinnern.

Die Vorteile des erfindungsgemäßen Verfahrens und der Metallrohre mit der aus der Beschichtung gebildeten Schicht liegen summarisch aufgezählt darin, daß
1. die Lebensdauer der Metallrohre wesentlich verlängert ist,
2. die Emission von Schwermetallionen wesentlich verringert ist, sodaß dadurch bedingte Schäden für die Gesundheit, insbesondere auch von Kleinstkindern, die Belastung von Trink- und Gebrauchswässern, die Anreicherung solcher Schwermetalle im Grundwasser und im Boden weitgehend vermieden werden,
3. der Aufwand der Reinigung des Rohres entfällt und alte, gebrauchte Schmiermittel nicht entsorgt werden müssen. Letzteres gilt lediglich dann nicht, wenn bei der Rohrfertigung Schmiermittel wie Seifen verwendet werden, die sich mit der Beschichtung stofflich nicht vertragen.

Die Menge an aufzutragender Beschichtung hängt von einer ganzen Reihe von Faktoren wie Rohmaterial, Rohrstärke, eventuellen Beanspruchungen wie starken Verbiegungen und der Zusammensetzung der durch das Rohr geleiteten Flüssigkeiten ab und schwankt deshalb in verhältnismäßig weiten Grenzen. Sie liegt bei einer Dicke von 5 bis 500 µm, bevorzugt zwischen 10 und 300 µm.

Für die meisten Anwendungen haben sich Schichtdicken von 10 bis 30 um als ausreichend und bevorzugt erwiesen. Sie sind dick genug, um einen zusammenhängenden Film auch bei Belastungen bei der Verarbeitung wie Biegen standzuhalten und sollten allein aus Gründen des Materialeinsatzes nicht dicker als notwendig sein. Schichtdicken von mehr als 30 µm werden deshalb lediglich dann erforderlich, wenn besonders große Rohrdurchmesser vorliegen und vor allem dann, wenn besonders aggressive Flüssigkeiten durch die Metallrohre geleitet werden sollen.

Von ganz erheblicher Bedeutung für die Menge der aufzutragenden Beschichtung und der Dicke der Schicht nach der Umwandlung ist die Viskosität der Beschichtungsmasse. Diese hängt aber von sehr vielen Faktoren ab, sodaß Zahlenangaben dazu schwer sind. Ganz allgemein gilt, daß die Viskosität einerseits so hoch sein sollte, daß nach ein-, gegebenenfalls auch mehrmaligem Auftrag auf das Metallrohr genügend Beschichtung auf dem Metallrohr verbleibt, um die gewünschte Dicke der Schicht nach der Nachbehandlung zu erhalten. Zum anderen sollte die Viskosität niedrig genug sein, um mit üblichen Arbeitsverfahren möglichst im Zeittakt der Rohrherstellung die Beschichtung aufzubringen. Sie liegt vorzugsweise im Bereich zwischen 15 bis 700 mm²/s.

Ganz bevorzugt ist der Bereich von 30 bis 300 mm²/s. An welcher Stelle des Rohrherstellungsverfahrens der Auftrag der Beschichtung und die Umwandlung in die feste Schicht erfolgt, hängt ebenfalls weitgehend von dem bestimmten Rohrherstellungsverfahren bzw. der vorhandenen Anlage ab. Bei Rohrzugverfahren, bei denen das Rohr über einen feststehenden Stopfen gezogen wird und damit Schmiermittel erforderlich ist, kann die Beschichtung beim Ziehen über den feststehenden Stopfen aufgetragen werden. Bei den heute meist üblichen maschinell kombinierten Herstellungsverfahren mit fliegendem Stopfen erfolgt der Auftrag besser jedoch in einem getrennten Arbeitsschritt.

Im Gegensatz zur technischen Lehre des früheren Vorschlages der DE-OS 39 32 865, bei dem C-haltige Zusätze zu konventionellen Schmiermitteln wie Mineralöl und nachfolgendes Cracken eine C-haltige Beschichtung ergeben haben und damit nur eine eng begrenzte Stoffgruppe zur Verfügung stand, erschließt das erfindungsgemäße Verfahren für die Erzeugung der Schutzschicht die breite Vielfalt der Kunststoffe. Bei der Vielzahl an Kunststoffen und Varianten ist eine auch nur einigermaßen erschöpfende Aufzählung nicht möglich und auch nicht erforderlich. Der Erzeuger von Metallrohren bzw. derjenige, der die erfindungsgemäße Beschichtung vornehmen will, kann sich hier an den Kunststoffhersteller wenden. Nachfolgend wird deshalb lediglich ein grober Überblick über die stoffliche Beschaffenheit geeigneter Beschichtungsmassen und die daraus erzeugten Schichten gemacht. Dabei kommen Kunststoffe dem Verfahren der Erfindung deshalb entgegen, weil sie ihrer Natur nach hochmolekular sind, aber aus Monomeren oder Oligomeren niederen Molekulargewichtes durch Polymerisation, Polykondensation oder Polyadditiven gebildet werden, sodaß für die Beschichtung Monomere bzw. bevorzugt Oligomere gewählt werden, die dann nach der Nachbehandlung die Schicht aus den daraus entstehenden Kunststoffen hohen Molekulargewichts ergeben.

Als besonders geeignet für das Verfahren der Beschichtung des Metallrohres und der Bildung einer bleibenden Schutzschicht auf dem Metallrohr hat sich die Stoffgruppe der Siloxane bewährt. Als flüssige Beschichtung mit geeigneter Viskosität finden dabei oligomere Siloxane mit 4 bis 30, vorzugsweise mit 6 bis 20 Monomereinheiten Verwendung, die anschließend in eine feste Schicht aus Polysiloxan mit Molekulargewichten bis zu 100.000 umgewandelt werden. Die Umwandlung erfolgt zweckmäßig mit Hilfe eines Radikalstarters. Der besondere Vorteil dieser Stoffgruppe liegt darin, daß bei bestimmten Typen ganz auf Wärmeeinwirkung verzichtet und die Aushärtung bei Raumtemperatur innerhalb von 60 Min. erfolgen kann. Sie hat weiter den Vorteil, daß bei Kupferrohren über Kovalent-Bindungen eine feste Verankerung erfolgt, wahrscheinlich mit der oberflächlich vorhandenen Kupferhydroxydschicht.

Als weitere Gruppe geeigneter Kunststoffe kommen in Betracht Polymerisationskunststoffe im engeren Sinne wie die Polyolefine Polyäthylen, Polypropylen und Polyisobutylen und Polystyrol. Schichten auf dieser Basis haben vor allem den Vorteil, chemisch weitgehend inert zu sein.

Bei einer Beschichtung auf Basis von Äthylen und Propylen sind Prepolmere mit Molgewichten zwischen und 1500 bevorzugt geeignet, haben gute Schmiereigenschaften und sind chemisch absolut inert. Ihre Umwandlung in hochmolekulare Polyolefine - auch Gemische aus Polyäthylen und Polypropylen haben sich bewährt - geschieht in vorbekannter Weise durch radikalische Inizierung mit Ziegler-Katalysatoren. Besonders bewährt hat sich dabei auch die Vernetzung der Beschichtung mit Peroxiden bei Temperaturen von 120 bis 130°C oder durch Bestrahlen mit Elektronen-, Gamma- oder Röntgenstrahlen.

Bei Schichten auf Basis Polystyrol ist Styrol mit einer Viskosität von ca. 7 mm²/s zu dünnflüssig, sodaß zweckmäßig Oligomere mit einer Viskosität von 15 bis 700 mm²/s, vorzugsweise 30 bis 300 mm²/s eingesetzt und dann bei 150°C zur Schicht aus festem Polystyrol polymerisiert werden. Die Schichten zeichnen sich durch sehr gute Wasserbeständigkeit, physiologische Unbedenklichkeit und große Härte aus und halten hohen mechanischen Belastungen, wie großen Biegebeanspruchungen stand, da sie hohe Zähigkeit und Reißfestigkeit haben.

Eine weitere Gruppe für die Schicht ist die der Polykondensationsharze wie Polyesterharze.

Als Beschichtung sind bevorzugt insbesondere Esteröle auf Basis Dicarbonsäure und Diolen geeignet, inesbesondere Ester der Adipin- und Sebacinsäure, wobei auch primäre Alkohole in die Versterungsreaktion einbezogen sein können. Für die Veresterungsreaktion sowohl bis zur Stufe der niedermolekularen Diester mit ca. 200 Baueinheiten, die gleichzeitig hervorragende Schmiereigenschaften haben, als auch für die Weiterreaktion zum hochkondensierten Polyester kommen Friedel-Craft-Katalysatoren wie AlCl₃ oder BF₃ in Betracht, aber auch Phosphorsäure und deren Abkömmlinge sowie Peroxide. Diese den Kondensations-Kunststoffen zugehörende Gruppe ist in einer derartig breiten Variationsbreite am Markt, daß es mühelos möglich ist, sich den geeigneten Typ mit der erforderlichen Qualität herauszusuchen. Sie hat lediglich den Nachteil, verhältnismäßig teuer zu sein, sodaß die Anwendung auf hochwertige Metallrohre wie Cu beschränkt bleibt.

Besonders vorteilhaft bei Esterölen und daraus umgewandelten Polyestern ist, daß sich eine weitere Variationsbreite und Anpassung an den speziellen Verwendungszweck durch Mischung mit anderen Schmiermitteleigenschaften aufweisenden Substanzen wie Siliconölen herstellen läßt.

Ganz besonders geeignet als Schicht ist schließlich die Gruppe der Polyadditionsharze, unter denen sich vor allem die Polyurethane auszeichnen, weil diese je nach Auswahl der Einzelkomponenten mit vielfältiger Eigenschaftspalette nahezu maßgeschneidert werden können.

Bei diesen handelt es sich bekanntlich um Umsetzungsprodukte von Diolen und anderen mehrwertigen Alkoholen mit Diisocyanaten.

Diese sind für die Zwecke der Erfindung deshalb so geeignet, weil in der Dialkoholkomponente in der Form der Polyätheralkohole eine große Variationsbreite vorliegt, sodaß bei dieser Stoffklasse unschwer der hinsichtlich der Viskosität geeignete Polyätheralkohol für die Beschichtung ausgewählt werden kann. Bei Polyurethan als Schicht sind zwei Wege zweckmäßig. Wenn die Beschichtung gleichzeitig die Funktion als Schmiermittel erfüllen soll, kann der Polyätheralkohol zunächst allein eingesetzt werden und dann die Umsetzung zum Polyurethan in einem zweiten Arbeitsschritt erfolgen, indem die Isocyanatkomponente auf den an der Wandung des Metallrohres verbliebenen Polyätheralkohol aufgetragen wird. Eine bevorzugte Variante besteht darin, Vormischungen aus Polyätheralkohol und Isocyanat als Schmiermittel zu benutzen und durch Erhitzen oder ähnliche Maßnahmen die Polyadditionsreaktion zum Polyurethan zu vollenden. Eine Polyurethanbeschichtung hat den erheblichen Vorteil, daß durch die Vielfalt der Polyätheralkohole ein den Erfordernissen angepaßtes Polyurethan geschaffen werden kann.

Die Erfindung wird weiter am Beispiel einer Beschichtung mit Siloxan und einer Schicht aus Polysiloxan auf der Innenseite eines Kupferrohres näher erläutert.

### Beispiel:

In einer Rohrzieh-Versuchsanlage mit feststehendem Stopfen ist am Rohreinlauf eine Zufuhreinrichtung für das flüssige Beschichtungsmaterial angebracht. Von dort aus wird innenseitig einem Kupferrohr mit einem Durchmesser von 18 cm ein Siloxan mit 20 Monomereinheiten (REN 60 der Firma Wackerchemie), dem 5 Gew.% eines Lösungsmittels zugegeben sind, aufgetragen. Die Viskosität der Beschichtungsmasse beträgt 60± 2 mm²/s. Die Beschichtung härtet in ca. 60 Min.bei Raumtemperatur zu einer dichten, glatten und festen Schicht aus, die eine Dicke von 20 µm und ein Flächengewicht von 7.10⁻⁴ g/cm² hat.

Selbst bei einer Vergrößerung von 1 : 1000 ist die Rohrinnenfläche glatt und fehlerfrei. Bei extremer Verformung, d.h. Verbiegen um 180° platzt die Schicht nicht ab, sondern behält ihren Zusammenhang bei.

## Patentansprüche

1. Verfahren zur Herstellung eines zumindest innenseitig mit einer Schutzschicht versehenen Metallrohres, bei dem eine Kaltverformung des Metallrohres durchgeführt und auf die Rohrwandung eine flüssige, viskose Beschichtung aus in eine bleibende, feste Schicht überführbaren Substanzen aufgetragen wird,
dadurch gekennzeichnet, daß
zur Kaltverformung des Metallrohres auf die Rohrwandung eine flüssige Beschichtung mit Schmiermitteleigenschaften aufweisenden Monomeren, Oligomeren und/oder niedermolekularen Polymeren aufgebracht wird, die im Anschluß an die Kaltverformung in eine feste Schicht umgewandelt werden, deren wesentlicher Bestandteil zu der Gruppe gehört, die Polysiloxan, Siliconharz, Polystyrol, Polyolefinharz, Polyäthylen, Polypropylen, Polyisobutylen, Polyesterharz und Polyurethan umfaßt.

2. Verfahren nach Anspruch 1,
dadurch gekennzeichnet, daß
so viel an flüssiger Beschichtung aufgetragen wird, daß bei der Nachbehandlung eine Schicht der Dicke 5 bis 500 µm gebildet wird.

3. Verfahren nach einem der Ansprüche 1 oder 2,
dadurch gekennzeichnet, daß
die Überführung in die feste Schicht durch Erhitzen bis 300°C erfolgt.

4. Verfahren nach einem der Ansprüche 1 oder 2,
dadurch gekennzeichnet, daß
die Überführung in die feste Schicht durch Bestrahlen und/oder Beschallen erfolgt.

5. Verfahren nach einem der Ansprüche 1 oder 2,
dadurch gekennzeichnet, daß
die Überführung in die feste Schicht mit Hilfe von Katalysatoren, Radikalstartern und/oder Härtern erfolgt.

6. Verfahren nach einem der Ansprüche 1 bis 5,
dadurch gekennzeichnet, daß
die flüssige Beschichtung in einem getrennten Arbeitsgang auf das Metallrohr aufgebracht wird.

## Claims

1. A process for producing a metal tube provided with a protective layer at least on its inner side, wherein cold working of the metal tube is effected and a liquid viscous coating comprising substances which can be converted into a permanent hard layer are applied to the tube wall, characterised in that for cold working of the metal tube there is applied to the tube wall a liquid coating with monomers, oligomers and/or low-molecular polymers having lubricant properties, which subsequently to the cold working operation are converted into a hard layer whose essential constituent belongs to the group which includes polysiloxane, silicone resin, polystyrene, polyolefin resin, polyethylene, polypropylene, polyisobutylene, polyester resin and polyurethane.

2. A process according to claim 1 characterised in that such an amount of liquid coating is applied that in the subsequent treatment a layer of 5 to 500 µm in thickness is formed.

3. A process according to one of claims 1 and 2 characterised in that conversion into the hard layer is effected by heating at up to 300°C.

4. A process according to one of claims 1 and 2 characterised in that conversion into the hard layer is effected by radiation and/or sound irradiation.

5. A process according to one of claims 1 and 2 characterised in that conversion into the hard layer is effected by means of catalysts, radical starters and/or hardeners.

6. A process according to one of claims 1 to 5 characterised in that the liquid coating is applied to the metal tube in a separate working operation.

## Revendications

1. Procédé de production d'un tube métallique doté, au moins sur son coté intérieur, d'une couche protectrice, procédé dans lequel une déformation à froid du tube métallique sera effectuée et un revêtement liquide visqueux, comportant ou consistant en des substances transformables en une couche solide permanente, sera appliquée sur la paroi du tube, procédé caractérisé en ce que, pour la déformation à froid du tube métallique, on applique sur la paroi du tube un revêtement liquide et comportant des monomères, des oligomères et/ou des polymères à bas poids moléculaire, ayant des propriétés lubrifiantes, et qui, après la déformation à froid, sont retransformés en une couche solide dont la partie constitutive essentielle appartient au groupe ou ensemble englobant du polysiloxane, de la résine de silicone, du polystyrène, de la résine de polyoléfine, du polyéthylène, du polypropylène, du polyisobutylène, de la résine de polyester et du polyuréthanne.

2. Procédé selon la revendication 1, caractérisé en ce qu'on applique une quantité de revêtement liquide telle que, lors du post-traitement, il se forme une couche de 5 à 500µm d'épaisseur.

3. Procédé selon l'une des revendications 1 ou 2, caractérisé en ce que la transformation en la couche solide est réalisée par chauffage jusqu'à 300°C.

4. Procédé selon l'une des revendications 1 ou 2, caractérisé en ce que la transformation en la couche solide a lieu par irradiation et/ou par exposition à des ultrasons.

5. Procédé selon l'une des revendications 1 ou 2, caractérisé en ce que la transformation en la couche solide a lieu à l'aide de catalyseurs, d'amorceur de radicaux et/ou de durcisseurs.

6. Procédé selon l'une des revendications 1 à 5, caractérisé en ce que le revêtement liquide est appliqué en une étape opératoire séparée sur le tube métallique.
